# EUROPÄISCHE PATENTSCHRIFT

(11) **EP 1 230 722 B1**
(45) Veröffentlichungstag und Bekanntmachung des Hinweises auf die Patenterteilung: **08.02.2006**
(21) Anmeldenummer: 00987072.6
(22) Anmeldetag: 01.11.2000
(51) Int. Cl.: H02H 7/085, H02P 6/00, E05F 15/16, H02K 5/128

(54) **VERFAHREN ZUR STEUERUNG EINER MOTORISCH ANGETRIEBENEN VERSTELLEINRICHTUNG**
METHOD FOR CONTROLLING A MOTOR DRIVEN ADJUSTMENT DEVICE
PROCEDE DE COMMANDE POUR DISPOSITIF D'AJUSTEMENT MOTORISE

(30) Priorität: 02.11.1999 DE 19952572
(43) Veröffentlichungstag der Anmeldung: 14.08.2002
(73) Patentinhaber: Brose Fahrzeugteile GmbH & Co. KG, Coburg, 96450 Coburg (DE)
(72) Erfinder: KALB, Roland, 96269 Rossach (DE); KINNELL, Craig, 96450 Coburg (DE)
(74) Vertreter: Baumgärtel, Gunnar
(86) Internationale Anmeldenummer: PCT/DE2000/003864
(87) Internationale Veröffentlichungsnummer: WO 2001/033688

(56) Entgegenhaltungen:
- DE-A- 4 019 787
- DE-A- 19 502 306
- DE-A- 19 809 628
- DE-C- 19 707 850
- DE-U- 29 707 440
- PATENT ABSTRACTS OF JAPAN vol. 16, no. 138 (E-1186), 7. April 1992 (1992-04-07) -& JP 04 000231 A (NIPPONDENSO CO LTD), 6. Januar 1992 (1992-01-06)
- PATENT ABSTRACTS OF JAPAN vol. 6, no. 155 (E-125), 17. August 1982 (1982-08-17) -& JP 57 078357 A (HITACHI LTD), 17. Mai 1982 (1982-05-17)

## Beschreibung

Die Erfindung bezieht sich auf ein Verfahren zur Steuerung einer motorischen Antriebseinheit einer Verstelleinrichtung gemäß dem Oberbegriff des Patentanspruches 1. Die erfindungsgemäße Antriebseinheit kann besonders vorteilhaft in Verbindung mit einem elektrisch betriebenen Fensterheber oder einem Schiebedach eingesetzt werden.

Eine gattungsgemäße elektronisch gesteuerte Antriebseinheit ist aus der EP 0 482 040 B1 bekannt. Sie besteht aus einem permanenterregten Gleichstrommotor in Form eines Stabankermotors, der mit einem Getriebe und einer elektronischen Steuerungseinheit eine Baueinheit bildet. Ein zungenförmiger Fortsatz der Steuerungseinheit weist an seinem freien Ende Mittel zur elektrischen Kontaktierung des Motors sowie Hall-Sensoren auf, denen ein auf der Motorwelle angeordneter Ringmagnet zugeordnet ist. Mittels der Sensorsignale kann nicht nur die Verstellposition der Fensterscheibe, sondern auch die Verstellgeschwindigkeit ermittelt werden. Im Falle eines Einklemmens eines Objekts im sich schließenden Fensterspalt kommt es zu einem erhöhten Verstellwiderstand, wodurch sich der Abstand zwischen den aufeinander folgenden Signalen vergrößert. Wird ein vorher definiertes Maß der Geschwindigkeitsänderung überschritten, so wird der Antrieb gestoppt und die Fensterscheibe reversiert.

Ein entsprechendes Einklemmschutz-Verfahren zur Steuerung eines Fensterheberantriebs wird in der DE 30 34 118 C2 beschrieben. Dabei wird während des Öffnungs- und Schließvorgangs der zurückgelegte Weg elektronisch erfaßt und beim Schließvorgang wird der Öffnungsweg mit dem jeweils zurückgelegten Schließweg verglichen. Der Verstellbereich der Fensterscheibe ist in drei Bereiche unterteilt. In einem ersten Bereich zwischen völlig geöffnet und etwa halb geöffnet, bleibt der elektronische Einklemmschutz ausgeschaltet; beim Auftreten eines Blockierzustandes wird der Motor nach Überschreitung eines vorgegebenen zeitlichen Grenzwertes abgeschaltet. In dem sich daran anschließenden zweiten Bereich, der kurz vor der Dichtung des Fensterrahmens endet, ist der Einklemmschutz aktiviert. Hier werden laufend Meßwerte ermittelt, die von der Drehzahl oder der Geschwindigkeit des Aggregats abhängig sind, und mit einem auf den Anfangsmeßwert bezogenen Grenzwert verglichen. Wird der Grenzwert überschritten, so schaltet die Steuerung den Antrieb kurzzeitig um und schaltet ihn dann ab. Bei Erreichen des Schließbereichs wird der Einklemmschutz wieder deaktiviert, da die Fensterscheibe wegen des zusätzlichen Widerstands der Dichtung sonst nicht vollständig geschlossen werden könnte.

Aufgrund der systembedingten Motorkennlinie, die bei eine Absenkung der Motordrehzahl zur Erhöhung des Drehmoments führt, kann es während eines Einklemmfalls zu einer unzulässig hohen Einklemmkraft kommen.

Da zur Einklemmerkennung ein so ausreichender Stellweg der den Ringmagneten tragenden Motorwelle notwendig ist, daß nach dem Beginn des Einklemmfalls wenigstens noch eine Signalperiode erfaßt werden kann, die mit dem Wert der vorangegangenen Signalperiode verglichen wird, muß ein Stellweg von wenigstens zwei Signalperioden garantiert werden. Unter ungünstigen Umständen, insbesondere beim Einklemmen eines harten Objekts (z.B. eines Kopfes), ist also nicht auszuschließen, daß sogar das maximale Drehmoment erreicht wird und somit eine erhebliche Gefährdung auftreten kann.

Die DE 198 09 628 A1 betrifft ebenfalls ein Verfahren zur Steuerung einer motorisch angetriebenen Verstelleinrichtung für ein Verstellteit eines Kraftfahrzeugs , wie z.B. einer Fensterscheibe oder ein Schiebedach. Dabei werden mittels Sensoren Strom- oder Spannungsschwankungen in den Feldspulen eines bürstenlosen, elektrisch kommutierten Mehrphasenmotors bestimmt , deren Frequenz in einem festen Verhältnis zur Drehzahl des Motors steht. Unterschreitet diese Drehzahl einen vorgegebenen Wert, so schaltet eine Sicherheitseinrichtung den Antrieb ab.

Der Erfindung liegt die Aufgabe zugrunde, ein Verfahren zur Steuerung einer Antriebseinheit für Verstelleinrichtungen in Kraftfahrzeugen zu entwickeln, welches geeignet ist, einen einfachen und sicheren Betrieb der Verstellteile zu gewährleisten. Insbesondere soll eine sichere Einklemmschutzerkennung und Einhaltung vorgegebener Grenzwerte für die zulässige Einklemmkraft auch bei einer Geschwindigkeitsregelung zur Erzielung einer lastunabhängigen konstanten Verstellgeschwindigkeit des Verstellteils gewährleistet sein. Darüber hinaus soll ein sicheres Anfahren von Anschlagspositionen möglich sein, ohne das Verstellsystem zusätzlich durch erhebliche Überschußkäfte zu verspannen.

Erfindungsgemäß wird die Aufgabe durch das Steuerungsverfahrens des Patentanspruch 1 gelöst. Die abhängigen Ansprüche geben Vorzugsvarianten der Erfindung an.

Das erfindungsgemäße Steuerungsverfahren wird mit Vorteil im Zusammenhang mit einem im Folgenden beschriebenen Antrieb angewendet. Demnach ist zwischen dem Ständer und dem Läufer einer als Synchronmotor ausgeführten motorischen Antriebseinheit ein Dichtelement angeordnet, welches den Motor einerseits in einen die elektrischen und elektronischen Komponenten ausweisenden Trockenraum und andererseits in einem Naßraum unterteilt. Hierdurch werden die Voraussetzungen für den Einsatz kostengünstiger Trockenraumausführungen der elektrischen Komponenten geschaffen. Darüber hinaus stehen mit dem Einsatz eines Synchronmotors aufgrund seiner systemspezifischen Eigenschaften für die Erfüllung der speziellen Anforderungen von Verstelleinrichtungen in Kraftfahrzeugen beste Voraussetzungen zur Verfügung. Dies trifft insbesondere hinsichtlich der Erzielung einer konstanten Verstellgeschwindigkeit eines Verstellteils bei sich über den Verstellweg ändernden Anforderungen an die Verstellkraft (z.B. infolge schwankender Reibungsverhältnisse) und hinsichtlich der Einhaltung vergleichsweise geringer Einklemmkräfte zu, zumal dann, wenn Fehlfunktionen des Einklemmschutzes (z.B. infolge von Schwingungen oder Stößen während der Fahrt) ausgeschlossen werden sollen.

Zur Gewährleistung geeigneter Anlaufbedingungen wird ein Synchronmotor mit wenigstens zwei Wicklungen zur Erzeugung von wenigstens zwei Polpaaren des Drehfeldes eingesetzt, dessen Motordrehzahl über die Frequenz des Drehfeldes auf einen konstanten Wert regelbar ist. Das für die Verstellbewegung des Verstellteils vorgesehene Drehmoment erfolgt über die Einstellung des Lastwinkels δ, der als Phasenverschiebung zwischen dem Erregerfeld und dem Drehfeld des Motors definiert ist.

Vorzugsweise bildet der Ständer des Synchronmotors mit der elektronischen Steuerungseinrichtung und den Steckem sowie gegebenenfalls mit der Sensorik eine vorgefertigte und vorprüfbare Baueinheit. Ein mechanischer Träger besitzt Formschlußelemente, die zur Herstellung einer mechanischen Verbindung mit dem Ständer in dessen Zwischenräume eingreifen. Zum Schutz der elektrischen Teile des Ständers vor Feuchigkeit kann der Träger topfförmig ausgebildet sein, so daß der Ständer zumindest teilweise derart vom Träger umschlossen ist, daß dieser als Trennwand zwischen einem Naß- und einem Trockenraum fungieren kann. Dabei verläuft die Trennwand im Luftspalt zwischen Ständer und Läufer.

Eine weitere Möglichkeit, den Ständer mit dem Träger zu verbinden und vor Nässe zu schützen besteht darin, daß der Ständer durch Umspritzen mit einem Kunststoff am Träger befestigt wird. Sofern auch der Träger aus Kunststoff besteht, kann der Ständer in diesen eingespritzt werden. Zur Vermeidung von Leistungsverlusten ist es notwendig, den Luftspalt zwischen Ständer und Läufer möglichst klein zu halten. Deshalb sollte eine möglichst dünnwandige Kapselung des Ständers vorgesehen werden.

Besonders geeignet ist ein derartiger Antrieb zur Verwendung für Fensterheber oder Schiebedächer, insbesondere wenn der Karosserieraum, in dem die Antriebseinheit angeordnet ist, eine Naß-/Trockenraumtrennung aufweist. Eine Einklemmschutzerkennung kann in einfacher und besonders sicherer Weise gewährleitet werden, da hierzu keine Verstellbewegung des Verstellteils erforderlich ist. Die Analyse der lastabhängigen Phasenverschiebung zwischen dem Erregerfeld des Läufers und dem Drehfeld des Ständers garantiert zu jedem Zeitpunkt eine sicher Messung, die im Zusammenhang mit anderen Meßwerten, wie z.B. der Verstellposition, Verstellgeschwindigkeit und historischen Meßwerten, eine komplexe Bewertung ermöglichen. Sofern eine bestimmte Überschußkraft oder maximale Einklemmkraft vorgegeben sind, kann eine Überschreitung dieser Kraft sicher dadurch vermieden weden, daß der Betriebspunkt des Synchronmotors auf einen solchen Lastwinkel δ_{B} vor dem Lastwinkel δ_{K} des Kippmoments eingestellt wird, daß der Drehmomentenzuwachs ΔM zwischen den beiden Lastwinkeln δ_{B}, δ_{K} am Verstellteil (z.B. Fensterscheibe) maximal zum Erreichen einer vorgegebenen Überschuß- bzw. Einklemmkraft führt.

An dieser Stelle sei darauf hingewiesen, daß der Antrieb auch zum Betreiben von Sitzverstelleinrichtungen Anwendung finden kann. Diese sind ebenso wie Fensterheber mit einem Einklemmschutz ausrüstbar, um Verletzungen zu vermeiden. Da die Verstellbedingungen eines Fahrzeugsitzes nicht nur von der Betriebstemperatur, dem Alterungsgrad, der Verschmutzung u.a., sondern auch vom Gewicht des Benutzers abhängen, empfiehlt es sich, jeden Sitz vor (z.B. bei Entriegelunge des Fahrzeugschlosses) und nach seiner Belegung kurz und quasi unmerklich zuverstellen, um die aktuellen Randbedingen zu ermitteln. Daraufhin kann der Betriebspunkt entsprechend den vorgegeben Anforderungen eingestellt werden.

Eine wesentliche Anforderung an Verstelleinrichtungen in Kraftfahrzeugen besteht in einem gleichmäßigen Lauf des Antriebes, der eine Voraussetzung zur Vermeidung modulierender Geräusche ist. Zu diesem Zweck wird die Verstellgeschwindigkeit des Verstellteils über die Frequenz des Drehfeldes auf einen konstanten Wert geregelt. Das für die Verstellbewegung des Verstellteils vorgesehene Drehmoment wird über den Lastwinkels δ, der als Phasenverschiebung zwischen dem Erregerfeld und dem Drehfeld des Motors definiert ist, eingestellt. Bei variierender Belastung des Verstellsystems wird der sich ändernde Lastwinkel δ durch Nachregeln der Stromstärke konstant gehalten. Dies kann durch Pulsweitenmodulation oder durch einen veränderlichen Widerstand erfolgt.

Zum Zwecke des Einklemmschutzes oder zum Anfahren eines den Verstellweg begrenzenden Anschlags stehen verschiedene Verfahrensweisen zur Verfügung, von denen die wesentlichen nachfolgend kurz beschrieben werden:

### Steuerungsverfahren mit Einklemmschutz

Zunächst wird der aktuelle Lastwinkel δₙ gemessen und darauf basierend der maximal zulässige Lastwinkels δₙ₊₁ der nachfolgenden Phase berechnet, wobei der aktuelle Lastwinkel δₙ um einen relativen Wert (X% x δₙ) oder einen absoluten Wert (Y Grad) erhöht wird. Nun werden die Lastwinkel δₙ und δₙ₊₁ miteinander verglichen. ist die Abweichung kleiner als der auf der Basis des Erhöhungsbetrags zulässige Wert, so liegt kein Einklemmfall vor und die Antriebseinheit wird weiterbetrieben, d.h. ein Nachregeln der Stromstärke ist zulässig. Ist die Abweichung jedoch größer als der auf der Basis des Erhöhungsbetrags zulässige Wert, so ist der weitere Betrieb der Antriebseinheit nur unter Ausschluß des Nachregelns der Stromstärke zulässig.

Wird ein zum Motorstillstand führendes Überschreiten des Kippmoments des Motors festgestellt, das bei einem Lastwinkel δ_{K} = 180°/N_{Wick} erreicht wird, wobei N_{Wick} der Anzahl der Motorwicklungen entspricht, so wird von einem Einklemmfall ausgegangen und der Motor wird abgeschaltet oder seine Drehrichtung umgekehrt oder der Motor wird für eine bestimmte Zeit oder Anzahl von Anlaufzyklen weiterbetrieben, wobei nach jedem Überschreiten des Kippmoments der Motor gemäß einer vorgesehenen Anlaufsteuerung wieder in Betrieb gesetzt wird. Bei Erreichen der vorbestimmten Zeit oder der Anzahl von Antaufzyklen wird von einem Einklemmfall ausgegangen und der Motor wird abgeschaltet oder seine Drehrichtung umgekehrt.

Wird nach einem Überschreiten des Kippmoments innerhalb der vorbestimmten Zeit oder der Anzahl von Anlaufzyklen bei einem für den Lastwinkel δₙ eingestellten Strom ein Lastwinkel δₙ₊ₘ gemessen, der kleiner ist als der auf der Basis des Erhöhungsbetrags zulässige Wert ist, so wird von einer vorrübergehenden, nicht auf einem Einklemmfall beruhenden Störung ausgegangen, so daß der Motor weiterbetrieben werden kann, bzw. der größer als der auf der Basis des Erhöhungsbetrags zulässige Wert ist, so wird von einem Anhalten der Störung ausgegangen und nach Überschreiten der vorbestimmten Zeit der Motor wird abgeschaltet oder seine Drehrichtung umgekehrt.

### Steuerungsverfahren zum Anfahren eines Anschlags

(A) Zunächst sollte ein Normierungslauf mit einem festgelegten maximalen Drehmoment, das ein sicheres erreichen der Anschlagsposition garantiert. Dabei erfolgt zumindest die Messung und Abspeicherung der Position, bei der der Motor stehen bleibt. Das nächste Anfahren der Anschlagsposition erfolgt ab einer festgelegten Verstellposition in der Nähe der Anschlagsposition mit einer stark verminderten Verstellgeschwindigkeit und einem veringerten Drehmoment, wobei die Regelung des Drehmoments über die Einstellung der Stromstärke erfolgt.
   Ein Abschalten der Antriebseinheit erfolgt bei Erreichen der abgespeicherten Anschlagsposition oder bei Erreichen eines vorgegebenen maximalen Drehmoments, das geringer als das maximale Drehmoment des Normierungslaufs ist, wenn die entsprechende Verstellposition einen zulässigen Abstand von der abgespeicherten Anschlagsposition nicht überschreitet, oder bei Erreichen einer vor der abgespeicherten Anschlagsposition liegenden Verstellposition und gegebenenfalls unter Ausnutzung der Nachlaufverhaltens des Verstellsystems.
(B) Eine weitere Variante geht ebenfalls von der Durchführung eines Normierungstaufs mit einem festgelegten maximalen Drehmoment und vom Messen sowie Abspeichern des von der Verstellposition des Verstellteils abhängigen Lastwinkels δₙ₋₁ zumindest für einen direkt an die Anschlagsposition angrenzenden Bereich aus, um das Maß der positionsabhängigen Schwergängigkeit zu ermitteln. Beim nächsten Anfahren der Anschlagsposition werden die aktuellen positionsabhängigen Meßwerte des Lastwinkels δₙ erfaßt und abgespeichert. Nun erfolgt die Berechnung des maximal einzustellenden Dehmoments in Abhängigkeit vom aktuellen Lastwinkel δₙ und vom Lastwinkel δₙ₋₁ der vorangegangenen Verstellbewegung. Der Betrieb der Antriebseinheit mit einem Drehmoment, das unterhalb des berechneten maximal einzustellenden Drehmoments liegt, garantiert eine das System schonenede Verfahrensweise.

Für verschieden Anwendungsfälle kann es aber auch ausreichend sein, daß zum Zwecke des Anfahrens einer Anschlagsposition die Drehfeldfrequenz und die elektrische Stromstärke reduziert werden. Bei Überschreitung des so reduzierten Kippmoments wird die Antriebseinheit abgeschaltet. Natürlich ist es auch möglich, die Antriebseinheit schon kurz vor dem Erreichen der Anschlagsposition abzuschalten und damit jegliche zusätzliche Systemverspannung zu vermeiden.

Da es mit der Erfindung möglich ist, sehr niedrige Einktemmkräfte sicher einzustellen, ohne daß es zur Einklemmerkennung eines Verstellwegs des Verstellteils bedarf, muß bei einem Stillstand des Motors aufgrung äußerer Einflüsse nicht aus Sicherheitsgründen das Vorliegen eines Einklemmfalls angenommen werden. Es ist also durchaus möglich und sinnvoll, den Motor unter Anwendung einer Anlaufsteuerung noch einmal oder mehrmals zu starten, um zu überprüfen, ob es sich um ein vorrübergehendes Ereignis handelt, welches zum Motorstillstand geführt hat. Hierzu sollte eine Anlaufsteuerung eingesetzt werden, die die Anlaufzeit minimiert.

Auf diesem Wege wird es möglich, ein Fehlauslösen des Einklemmschutzes, z.B. infolge vertikaler Beschleunigungskräfte beim Durchfahren einer sogenannten Schlechtwegstrecke, zu vermeiden.

Ein besonderer Vorteil der Erfindung besteht darin, daß der Betriebspunkt des Motors jeder einzelnen Verstelleinrichtung bei einem Normierungslauf mittels der elektronischen Steuerungseinrichtung in einfache Weise automatisch eingestellt werden kann. Dies geschieht immer dann, wenn eine vorgegebene zulässige Abweichung überschritten wird. Die zulässige Abweichung kann sich insbesondere aus der Differenz zwischen dem kleinsten Lastwinkel δₘᵢₙ innerhalb des Überwachungsbereichs einer Verstellbewegung und dem Lastwinkel δₖ des Kippmoments ergeben, bei der sich eine Drehmomentendifferenz ΔM einstellt, das am Verstellteil die maximal zulässige Verstellkraft erzeugen kann.

Nachfolgend wird die Erfindung anhand eines Ausführungsbeispiels sowie der dargestellten Figuren näher erläutert. Es zeigen:
- Figur 1: schematische Schnittdarstellung einer Antriebseinheit mit Außenläufermotor und elektronischer Steuerungseinheit, wobei die elektrischen und elektronischen Bauteile durch die Wandung eines Trägers vom Naßraum abgetrennt sind;
- Figur 2: Motorkennlinie (Drehzahl // Drehmoment)
- Figur 3: Motorkennünie (Stomstärke // Drehmoment)
- Figur 4: Motorkennlinie (Drehmoment // Lastwinkel)

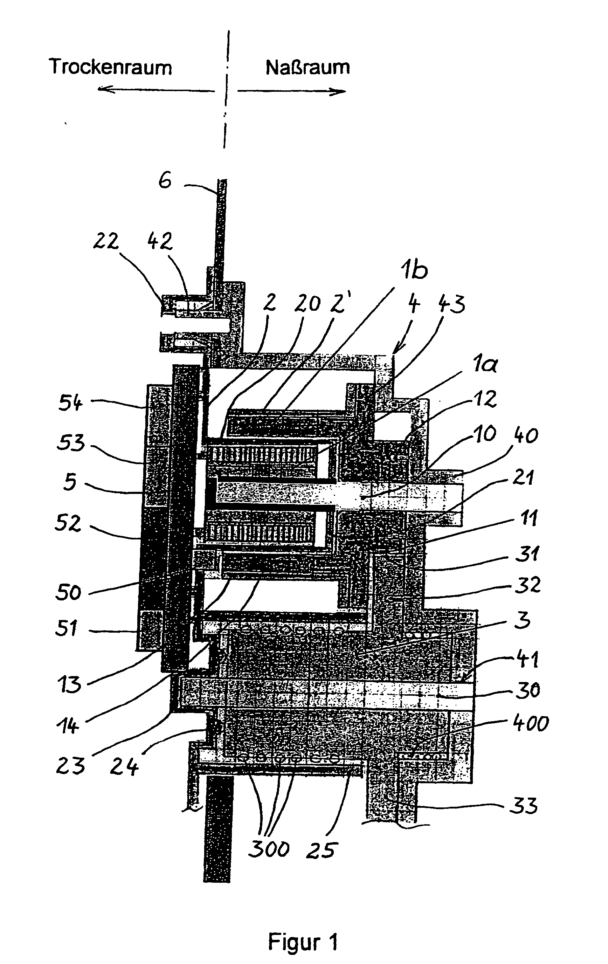

Die schematische Darstellung von Figur 1 zeigt eine Antriebseinheit für einen elektrisch betriebenen Fensterheber einer Fahrzeugtür, die durch eine Wandung 6 in einen Naßraum und einen Trockenraum aufgeteilt ist. Demnach ist die aus einem Außenläufermotor 1a, 1b, einem mechanischen Getriebe 11, 25, 30, 31 und einer elektronischen Steuerungseinheit 5 bestehende Antriebseinheit mit einer Montageträger 2 ausgerüstet, der eine sich durch den Motor ziehende Naß-Trockenraum-Grenze bildet. Der Montageträger 2 besitzt einen zylindrischen Bereich 20, der von einem deckelartigen Bereich 21 abgeschlossen wird, in dessen Hohlaum der Ständer 1 a des Außenläufermotors angeordnet ist. Der Ständer 1a ist fest mit dem Montageträger 2 oder einer (nicht dargestellten) Grundplatte der elektronischen Steuerungseinheit 5 verbunden. Damit wird eine direkte elektrische Kontaktierung des Ständers 1a über die Steuerungseinheit 5 möglich, die auch die Sensorik 5 und die Stecker 51 bis 54 trägt.

Des weiteren besitzt der Montageträger 2 wenigstens einen Befestigungsbereich 22 mit Justierungsmitteln, in den die Befestigungs- und Justierungsmittel 42 des naßraumseitigen Lagerdeckels 4 durch eine Öffnung in der Wandung 6 eingreifen. Im Lagerdeckel 4 sind Vormontagemittel 12 integriert, die in paßfähige Formschlußelemente des Ständers 1 b eingeclipst werden können, um so eine Vormontagegruppe zu bilden. Dabei wird gleichzeitig die zuvor montierte Seiltrommel 3 über die Verschachtelung der Ringe 33, 43 in ihrer vormontierten Position abgestützt. Die Achse 32 zentriert die Seiltrommel 3 zum einen über das Radiallager 41 im Lagerdeckel 4 und andererseits über das im Montageträger 2 integrierte Radiallager 23. Ein Axiallager 24 hält die Seiltrommel 3 in der Antriebseinheit spielfrei.

Um einen optimalen Rundlauf des Motors 1a, 1b zu gewährleisten, werden Ständer 1a und Läufer 1 b über eine gemeinsame Achse 10 zueinander zentriert, ohne daß dabei die Achse 10 die Naß-/Trockenraumtrennung des Montageträgers 2 durchbricht. Wegen der konsequenten Trennung zwischen dem Ständer 1a und dem Läufer 1b gibt es keine zueinander bewegten Dichtungsbereiche.

Die in diesem Ausführungsbeispiel vorgesehene Kraftübertragung erfolgt über die Ritzeiverzahnungen 11, 31. Bei diesem nicht selbsthemmenden Getriebe ist es notwendig, die abtriebseitig auftretenden Drehmomente über eine Bremse 400 oder ein (nicht dargestelltes) Klemmgesperre abzustützen.

Gegenüber der Stirnseite der Permanentmagneten 14 des Läufers 1b ist auf der elektronischen Steuerungseinrichtung 5 zur Drehzahlerfassung und Berechnung der Verstellposition ein magnetoresistiver Sensor 50 plaziert. Das Drehrichtungssignal kann dem Ansteuerungssignal entnommen werden, so daß eine eindeutige Zuordnung des Sensorsignals zu einer der beiden Drehrichtungen gewährleistet ist.

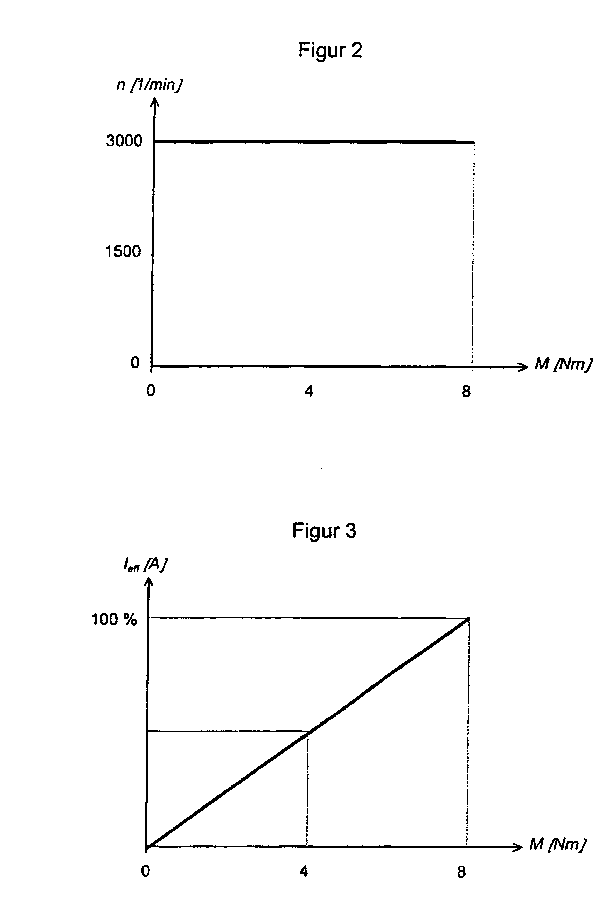

Figur 2 zeigt die Abhängigkeit der Drehzahl n eines Synchronmotors vom Drehmoment M. Demnach bleibt die über das Drehfeld eingestellte Drehzahl konstant, solange das Kippmoment nicht erreicht wird und der Motor stehen bleibt. Das Drehmoment M kann über die Stromstärke I an die am Motor anliegende Belastung angepaßt werden. Zwischen der effektiven Stromstärke l_{eff} und dem Drehmoment M des Motors besteht ein proportionaler Zusammenhang, wie Figur 3 zeigt.

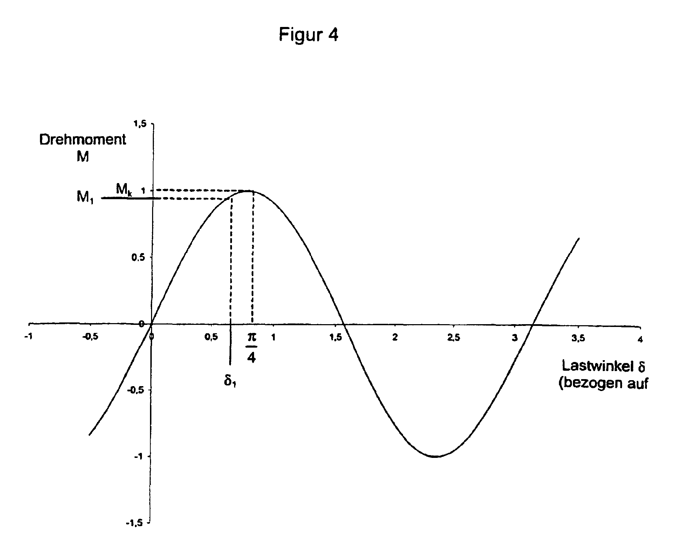

In Figur 4 ist die sinusförmige Kennlinie des Synchronmotors dargestellt, wobei das Drehmoment M über dem Lastwinkel δ aufgetragen ist. Der Arbeitsbereich des Motors erstreckt sich bis maximal π/4, was einem Lastwinkel von 90° und somit dem sogenannten Kippwinkel δ_{K} entspricht, bei dem das Drehmoment M seinen maximalen Wert erreicht, nämlich das sogenannte Kippmoment Mₖ.

Um einen stabilen Lauf des Motors zu gewährleisten, wird der Betriebspunkt des Motors auf einen Lastwinkel δ, festgelegt, der einen hinreichend großen Abstand vom Lastwinkel δ_{K} (90°) des Kippmoments Mₖ aufweist. Durch die Einstellung des Lastwinkels δ₁ wird auch der Abstand zwischen dem Drehmoment M, des Betriebspunktes und dem Kippmoment Mₖ festgelegt. Aus der Differenz zwischen diesen beiden Momenten M₁, Mₖ resultiert eine am Verstellteil anliegende Kraft, die der maximalen Einktemmkraft bzw. Überschußkraft entspricht. Mit einem Synchronmotor kann also in einfacher und sicherer Weise die maximal zulässige Einklemmkraft des Verstellteils eingestellt und deren Überschreitung sicher ausgeschlossen werden. Auch unterschiedliche Anforderungen an die Empfindlichkeit können durch die Variation des Lastwinkels erfüllt werden, zum Beispiel um ein Fehlreversieren einer Fensterscheibe beim Befahren einer Schlechtwegstrecke zu vermeiden. Dazu können beispielsweise durch eine Sensorik die auf die Fahrzeugkarosserie einwirkenden Schwingungen und Stöße gemessen und bewertet werden. In Abhängigkeit der Meßergebnisse wird dann der Lastwinkel des Betriebspunktes um einem angemessenen Wert verringert.

Die Hauptvorteile der Verwendung eines Synchronmotors in Verstelleinrichtungen für Kraftfahrzeuge sind folgende:
- einfache Geschwindigkeitsregelung
- sichere Einklemmschutzerkennung über die Auswertung des Lastwinkeis, ohne die Notwendigkeit einer Verstellbewegung des Verstellteils
- sichere Einklemmkraft- und Überschußkraftbegrenzung durch entsprechende Einstellung einer begrenzten Winkeldifferenz zwischen Lastwinkel und Kippwinkel
- keine Kommutierungsgeräusche
- geringe elektromagnetische Störstrahlung
- gute Integrationsmöglichkeiten für sämtliche elektrischen und elektronischen Komponenten der Antriebseinheit
- Möglichkeit einer konsequenten Naß-/Trockenraumtrennung durch den Motor hindurch, ohne daß eine Abdichtung zwischen zueinander bewegten oder drehenden Teilen notwendig ist
- Antriebseinheit läßt sich in eine die elektrischen und elektronischen Komponenten aufweisende und eine das Getriebe und den Läufer des Motors aufweisende Unterbaugruppe unterteilen

### Bezugszeichenliste

- 1a: Ständer
- 1 b: Läufer
- 10: Achse
- 11: Ritzelverzahnung
- 12: Vormontageelement
- 13: Metallgehäuse
- 14: Permanentmagnet

- 2: Träger, Montageträger
- 20: zylindrischer Bereich des Trägers
- 21: stimseitiger Bereich des Trägers
- 22: Befestigungsbereich mit Justierungsmitteln
- 23: Radiallager
- 24: Axiallager
- 25: Seiltrommelgehäuse

- 3: Seiltrommel
- 30: Achse
- 31: Ritzelverzahnung
- 32: Vormontageelement
- 33: Ring
- 300: Seil

- 4: Lagerdeckel, Gehäuse
- 40: Radiallager
- 41: Radiallager
- 42: Befestigungsbereich mit Justierungsmitteln
- 43: Ring
- 400: Sperrvorrichtung, Bremsvorrichtung

- 5: elektronische Steuerungseinheit
- 50: Sensor, Hall-Element
- 51: Stecker
- 52: Stecker

- 53: Stecker
- 54: Stecker

- 6: Wandung

- δ: Lastwinkel

- I: Stomstärke
- n: Drehzahl des Motors
- M: Drehmoment des Motors

## Patentansprüche

1. Verfahren zur Steuerung einer motorischen angetriebenen Verstelleinrichtung für ein Verstellteil in Kraftfahrzeugen mittels einer elektronischen Steuerungseinrichtung, insbesondere zur Steuerung von Verstelleinrichtungen mit einem Einklemmschutz und/oder mit einer Überschußkraftbegrenzung, wobei
• zur Generierung von Steuerungssignalen solche Meßgrößen oder Signale erfaßt und ausgewertet werden, die mit der Dynamik der Verstelleinrichtung und bei Bedarf mit der Position des Verstellteils korrellert sind.
• die Verstellgeschwindigkeit des Verstelltells über die Frequenz eines Drehfeldes der als Synchronmotor ausgeführten motorischen Antriebseinheit auf einen konstanten Wert geregelt wird, und
• das für die Verstellbewegung des Verstellteils vorgesehene Drehmoment der Antriebseinheit über die Einstellung des Lastwinkels (δ_{B}) in Bezug auf den Kippwinkel (δ_{K}) erfolgt, wobei der Lastwinkel (δ) als Phasenverschiebung zwischen dem Erregerfeld und dem Drehfeld des Synchronmotors definiert ist und der Kippwinkel (δ_{K}) dem Lastwinkel entspricht, bei dem das Drehmoment ein Maximum erreicht.

2. Verfahren nach Anspruch 1, **dadurch gekennzeichnet, daß** der bei variierender Belastung des Verstellsystems sich ändernde Lastwinkel δ durch Nachregein der Stromstärke konstant gehalten wird.

3. Verfahren nach Anspruch 2, **dadurch gekennzeichnet, daß** das Nachregeln der effektiven Stromstärke durch Pulsweitenmodulation erfolgt.

4. Verfahren nach Anspruch 2, **dadurch gekennzeichnet, daß** das Nachregeln der Stromstärke durch einen veränderlichen Widerstand erfolgt.

5. Verfahren nach einem der voranstehenden Ansprüche, **dadurch gekennzeichnet, daß** zum Zwecke des Einklemmschutzes der Betriebspunkt des Motors auf einen solchen Lastwinkel δ_{B} vor dem Lastwinkel δ_{K} des Kippmoments eingestellt wird, daß der Drehmomentenzuwachs ΔM zwischen den Lastwinkein δₐ, δ_{K} am Verstellteil (z.B. Fensterscheibe) maximal zum Erreichen einer vorgegebenen Überschußkraft führt.

6. Verfahren nach einem der voranstehenden Ansprüche, **dadurch gekennzeichnet, daß** zum Zwecke des Einklemmschutzes wie folgt vorgegangen wird:
• Messen des aktuellen Lastwinkels δₙ,
• Vorausberechnen des maximal zulässigen Lastwinkels δₙ₋₁ der nachfolgenden Phase, wobei der aktuelle Lastwinkel δₙ um einen relativen Wert (X% x δₙ) oder einen absoluten Wert (Y Grad) erhöht wird.
• Vergleichen von δₙ und δₙ₊₁.
* Ist die Abweichung kleiner als der auf der Basis des Erhähungsbetrags zulässige Wert, so liegt kein Einklemmfall vor und die Antriebseinheit wird weiterbetrieben, d.h. ein Nachregeln der Stromstärke ist zulässig.
* Ist die Abweichung größer als der auf der Basis des Erhöhungsbetrags zulässige Wert, so ist der weitere Betrieb der Antriebseinheit nur unter Ausschluß des Nachregeins der Stromstärke zulässig.
• Wird ein zum Motorstillstand führendes Überschreiten des Kippmoments des Motors festgestellt, das bei einem Lastwinkel δ_{K} = 180°/N_{Wick} erreicht wird, wobei N_{Wick} der Anzahl der Motorwicklungen entspricht.
* so wird von einem Einklemmfall ausgegangen und der Motor wird abgeschaltet oder seine Drehrichtung umgekehrt oder
* der Motor wird für eine bestimmte Zeit oder Anzahl von Anlaufzyklen weiterbetrieben, wobei nach jedem Überschreiten des Kippmoments der Motor gemäß einer vorgesehenen Anlaufsteuerung wieder in Betrieb gesetzt wird.
• Bei Erreichen der vorbestimmten Zeit oder der Anzahl von Anlaufzyklen wird von einem Einklemmfall ausgegangen und der Motor wird abgeschaltet oder seine Drehrichtung umgekehrt.
• Wird nach einem Überschreiten des Kippmoments innerhalb der vorbestimmten Zeit oder der Anzahl von Anlaufzyklen bei einem für den Lastwinkel δₙ eingestellten Strom ein Lastwinkel δₙ₊ₘ gemessen,
* der kleiner als der auf der Basis des Erhöhungsbetrags zulässige Wert ist, so wird von einer vorrübergehenden, nicht auf einem Einklemmfall beruhenden Störung ausgegangen, so daß der Motor weiterbetrieben werden kann, bzw.
* der größer als der auf der Basis des Erhöhungsbetrags zulässige Wert ist, so wird von einem Anhalten der Störung ausgegangen und nach Überschrelten der vorbestimmten Zeit der Motor wird abgeschaltet oder seine Drehrichtung umgekehrt.

7. Verfahren nach einem der voranstehenden Ansprüche, **dadurch gekennzeichnet, daß** zum Zwecke des Anfahrens einer den Verstellweg begrenzenden Anschlagsposition wie folgt vorgegangen wird:
• Durchführung eines Normierungslaufs mit einem festgelegten maximalen Drehmoment und messen sowie abspeichern der Position, bei der der Motor stehen bleibt, sofern keine entsprechenden Daten im Speicher der elektronischen Steuerungseinrichtung abgelegt sind.
• Betreiben der Antriebseinhelt beim nächsten Anfahren der Anschlagsposition ab einer festgelegten Verstellposition In der Nähe der Anschlagsposition mit einem verringerten Drehmoment und einer stark verminderten Geschwindigkeit, wobei die Regelung des Drehmoments über die Einstellung der Stromstärke erfolgt.
• Abschalten der Antriebseinheit
* bei Erreichen der abgespeicherten Anschlagsposition oder
* bei Erreichen eines vorgegebenen maximalen Drehmoments, das geringer als das maximale Drehmoment des Normierungslaufs ist, wenn die entsprechende Verstellposition einen zulässigen Abstand von der abgespeicherten Anschlagsposition nicht überschreitet, oder
* bei Erreichen einer vor der abgespeicherten Anschlagsposition liegenden Verstellposition und gegebenenfalls unter Ausnutzung des Nachlaufverhaltens des Verstellsystems.

8. Verfahren nach einem der voranstehenden Ansprüche, **dadurch gekennzeichnet, daß** zum Zwecke des Anfahrens einer den Verstellweg begrenzenden Anschlagsposition wie folgt vorgegangen wird:
• Durchführung eines Normierungslaufs mit einem festgelegten maximalen Drehmoment und messen sowie abspeichern des von der Verstellposition des Verstellteils abhängigen Lastwinkels δₙ₋₁ zumindest für einen direkt an die Anschlagsposition angrenzenden Bereich, um das Maß der positionsabhängigen Schwergängigkeit zu ermitteln,
• Messen des aktuellen positionsabhängigen Lastwinkels δₙ beim nächsten Anfahren der Anschlagsposition und abspelchem der Meßwerte,
• Berechnen des maximal einzustellenden Drehmoments in Abhängigkeit vom aktuellen Lastwinkel δₙ und vom Lastwinkel δₙ₋₁ der vorangegangenen Verstellbewegung,
• Betreiben der Antriebseinheit ab einer festgelegten Verstellposition in der Nähe der Anschlagsposition mit einem Drehmoment, das unterhalb des berechneten maximal einzustellenden Drehmoments liegt, wobei die Regelung des Drehmoments über die Einstellung der Stromstärke erfolgt.

9. Verfahren nach einem der voranstetienden Ansprüche, **dadurch gekennzeichnet, daß** zum Zwecke des Anfahrens der unteren Anschlagsposition eines Fensterhebers die Drehfeldfrequenz reduziert werden.

10. Verfahren nach Anspruch 9, **dadurch gekennzeichnet, daß** bei Überschreitung des reduzierten Kippmoments die Antriebseinheit abgeschaltet wird.

11. Verfahren nach Anspruch 9, **dadurch gekennzeichnet, daß** kurz vor dem Erreichen der Anschlagsposition die Antriebseinheit abgeschaltet wird.

12. Verfahren nach einem der voranstehenden Ansprüche, **dadurch gekennzeichnet, daß** der Motor aus dem Stillstand durch eine Anlaufsteuerung in den Betriebszustand überführt wird, die die Summe aller trägen Massen des Verstellsystems berücksichtigt, mit dem Ziel, die Anlaufzeit zu minimieren.

13. Verfahren nach einem der voranstehenden Ansprüche, **dadurch gekennzeichnet, daß** die Anlaufsteuerung des Motor aus dem Stillstand derart erfolgt, daß in Abhängigkeit der Position das Verstelltells (z.B. Fensterscheibe, Tür, Sitz) das maximal abgebbare Drehmoment über die Einstellung des Lastwinkeis auf unterschiedliche Werte begrenzt wird, mit dem Ziel, die Überschußkraft in der Anlaufphase des Motors beschränken.

14. Verfahren nach einem der voranstehenden Anspruche, **dadurch gekennzeichnet, daß** die Anlaufsteuerung nach einem Stillstand des Motors infolge äußerer Einflüsse, z.B. infolge vertikaler Beschleunigungskräfte beim Durchfahren einer sogenannten Schlechtwegstrecke, für eine bestimmte Zeit oder für eine vorgegebene Anzahl von Startzyklem automatisch aktiviert wird.

15. Verfahren nach einem der voranstehenden Ansprüche, **dadurch gekennzeichnet, daß** der Betriebspunkt des Motors jeder einzelnen Verstelleinrichtung bei einem Normierungslauf mittels der elektronischen Steuerungseinrichtung automatisch eingestellt wird.

16. Verfahren nach Anspruch 15, **dadurch gekennzeichnet, daß** der Betriebspunkt des Motors automatisch den veränderten Bedingungen angepaßt wird, wenn eine vorgegebene zulässige Abweichung überschritten ist.

17. Verfahren nach Anspruch 16, **dadurch gekennzeichnet, daß** sich die zulässige Abweichung aus der Differenz zwischen dem kleinsten Lastwinkel δₘᵢₙ innerhalb des Überwachungsbereichs einer Verstellbewegung und dem Lastwinkel δ_{K} des Kippmoments ergibt, bei der sich eine Drehmomentendifferenz ΔM einstellt, das am Verstellteil die maximal zulässige Verstellkraft erzeugen kann.

## Claims

1. Method of controlling a motor-driven adjusting device for an adjustment member in motor vehicles by means of an electronic control device, in particular for controlling adjusting devices with trap protection and/or with limitation of excess force, wherein
• measured variables or signals correlated with the dynamics of the adjusting device and, if necessary, with the position of the adjustment member are detected and evaluated in order to generate control signals,
• the rate of adjustment of the adjustment member is controlled to a constant value via the frequency of a rotating field of the motor drive unit constructed as a synchronous motor,
• the drive unit torque provided for the adjustment movement of the adjustment member is achieved via the setting of the load angle (δ_{B}) with respect to the tilt angle (δ_{K}), the load angle (δ) being defined as phase displacement between the exciting field and the rotating field of the synchronous motor, and the tilt angle (δ_{K}) corresponding to the load angle at which the torque reaches a maximum.

2. Method according to claim 1, **characterised in that** the load angle δ which changes as the load of the adjustment system varies is kept constant by readjusting the current.

3. Method according to claim 2, **characterised in that** the effective current is readjusted by pulse width modulation.

4. Method according to claim 2, **characterised in that** the current is readjusted by a variable resistor.

5. Method according to any of the preceding claims, **characterised in that**, for trap protection, the operating point of the motor is set at such a load angle δ_{B} before the load angle δ_{K} of the breakdown torque that the increase in torque ΔM between the load angles δ_{B}, δ_{K} at the adjustment member (for example windowpane) leads, to a maximum, to attainment of a predetermined excess force.

6. Method according to any of the preceding claims, **characterised in that** the following procedure is adopted for trap protection:
• measurement of the prevailing load angle δₙ
• prediction of the maximum permitted load angle δₙ₊₁ of the subsequent phase, the prevailing load angle δₙ being increased by a relative value (X% x δₙ) or an absolute value (Y degrees)
• comparison of δₙ and δₙ₊₁
* if the deviation is smaller than the value permitted on the basis of the increase, there is no entrapment and the drive unit will continue to operate, i.e. readjustment of the current is permitted
* if the deviation is greater than the value permitted on the basis of the increase, further operation of the drive unit is permitted only in the absence of readjustment of the current
• if the exceeding of the breakdown torque of the motor which is achieved at a load angle δ_{K} = 180°/N_{wind}, leading to a stoppage of the motor is detected, N_{wind} corresponding to the number of motor windings
* entrapment is assumed and the motor is switched off or its direction of rotation reversed or
* the motor continues to operate for a specific time or number of starting cycles, the motor being started up again in accordance with a proposed starting sequence control after each exceeding of the breakdown torque
• on attainment of the predetermined time or number of starting cycles, an entrapment is assumed and the motor is switched off or its direction of rotation reversed
• if, after the exceeding of the breakdown torque within the predetermined time or number of starting cycles with a current adjusted for the load angle δₙ, a load angle δₙ₊ₘ is measured
* which is lower than the value permitted on the basis of the increase, a temporary disturbance not based on an entrapment is assumed, so the motor can still be operated, or
* which is greater than the value permitted on the basis of the increase, then a cessation of the disturbance is assumed and the motor is switched off or its direction of rotation reversed once the predetermined time has been exceeded.

7. Method according to any of the preceding claims, **characterised in that**, for approaching a stop position limiting the adjustment path, the following procedure is adopted:
• performance of a normalising run with an established maximum torque and measurement and storage of the position at which the motor stalls, if no corresponding data has been stored in the memory of the electronic control device
• operation of the drive unit when the stop position is next approached from an established adjustment position in the vicinity of the stop position with reduced torque and greatly reduced speed, the torque being controlled by setting the current
• switching off the drive unit
* on reaching the stored stop position or
* on reaching a predetermined maximum torque which is lower than the maximum torque of the normalising run when the corresponding adjustment position does not exceed a permitted distance from the stored stop position, or
* on reaching an adjustment position located in front of the stored stop position optionally utilising the slowing-down behaviour of the adjustment system.

8. Method according to any of the preceding claims, **characterised in that**, for approaching a stop position limiting the adjustment path, the following procedure is adopted:
• performance of a normalising run with an established maximum torque and measurement and storage of the load angle δₙ₋₁ dependent on the adjustment position of the adjustment member at least for a region directly adjoining the stop position, in order to determine the extent of the position-dependent sluggishness
• measurement of the prevailing position-dependent load angle δₙ when the stop position is next approached and storage of the measured values
• calculation of the maximum torque to be set, as a function of the prevailing load angle δₙ and of the load angle δₙ₋₁ of the preceding adjustment movement
• operation of the drive unit from an established adjustment position in the vicinity of the stop position with a torque which is lower than the calculated maximum torque to be adjusted, the torque being controlled by setting the current.

9. Method according to any of the preceding claims, **characterised in that**, for approaching the lower stop position of a window regulator, the rotating field frequency is reduced.

10. Method according to claim 9, **characterised in that** the drive unit is switched off when the reduced breakdown torque is exceeded.

11. Method according to claim 10, **characterised in that** the drive unit is switched off just before reaching the stop position.

12. Method according to any of the preceding claims, **characterised in that** the motor is converted from the stoppage to the operating state by a starting sequence control which takes the sum of all inert masses of the adjustment system into consideration with the aim of minimising the starting time.

13. Method according to any of the preceding claims, **characterised in that** the starting sequence control of the motor from the stoppage is effected in such a way that, depending on the position of the adjustment member (for example windowpane, door, seat) the maximum torque which may be supplied is limited to various values by setting the load angle with the aim of restricting the excess force in the starting phase of the motor.

14. Method according to any of the preceding claims, **characterised in that** the starting sequence control is activated automatically for a certain time or for a predetermined number of starting cycles after a stoppage of the motor due to external influences, for example due to vertical acceleration forces when travelling over a so-called rough track.

15. Method according to any of the preceding claims, **characterised in that** the operating point of the motor of each individual adjusting device is set automatically during a normalising run by means of the electronic control device.

16. Method according to claim 15, **characterised in that** the operating point of the motor is adapted automatically to the changed conditions when a predetermined permitted deviation is exceeded.

17. Method according to claim 16, **characterised in that** the permitted deviation is obtained from the difference between the smallest load angle δₘᵢₙ within the monitored range of an adjustment movement and the load angle δₖ of the breakdown torque at which a torque difference ΔM is set, which is capable of producing the maximum permitted adjustment force on the adjustment member.

## Revendications

1. Procédé pour commander un dispositif d'ajustement entraîné par moteur pour une pièce d'ajustement dans des véhicules automobiles au moyen d'un dispositif de commande électronique, en particulier pour commander des dispositifs d'ajustement avec une protection anti-pincement et/ou une limitation de force excédentaire, dans lequel :
pour générer des signaux de commande, des grandeurs ou des signaux de mesure sont saisis et évalués, qui sont corrélés avec la dynamique du dispositif d'ajustement et au besoin avec la position de la pièce d'ajustement ;
la vitesse d'ajustement de la pièce d'ajustement est régulée sur une valeur constante via la fréquence d'un champ tournant de l'unité d'entraînement motorisée réalisée comme moteur synchrone ; et
le couple de rotation de l'unité d'entraînement, prévu pour le mouvement d'ajustement de la pièce d'ajustement, a lieu via le réglage de l'angle de charge (δ_{B}) en référence à l'angle de décrochage (δ_{K}), l'angle de charge (δ) étant défini comme décalage de phases entre le champ excitateur et le champ tournant du moteur synchrone et l'angle de décrochage (δ_{K}) correspondant à l'angle de charge pour lequel le couple de rotation atteint un maximum.

2. Procédé selon la revendication 1, **caractérisé en ce que**, lors d'une charge variable du système d'ajustement, un angle de charge δ qui se modifie est maintenu constant par la régulation de l'intensité de courant.

3. Procédé selon la revendication 2, **caractérisé en ce que** la régulation de l'intensité de courant effective a lieu via une modulation de longueur d'impulsion.

4. Procédé selon la revendication 2, **caractérisé en ce que** la régulation de l'intensité de courant effective a lieu via une résistance variable.

5. Procédé selon l'une des revendications précédentes, **caractérisé en ce que**, dans le but de la protection anti-pincement, le point de fonctionnement dynamique du moteur est ajusté sur un tel angle de charge δ_{B} avant l'angle de charge δ_{K} du couple de décrochage et **en ce que** l'augmentation du couple de rotation ΔM entre les angles de charge δ_{B}, δ_{K} sur la pièce d'ajustement (par exemple, une glace de fenêtre) mène au maximum à l'obtention d'une force excédentaire prescrite.

6. Procédé selon l'une des revendications précédentes, **caractérisé en ce que**, dans le but de la protection anti-pincement, les opérations suivantes sont exécutées :
mesure de l'angle de charge actuel δₙ ;
calcul préalable de l'angle de charge maximal autorisé δₙ₊₁ de la phase suivante, l'angle de charge actuel δₙ étant augmenté d'une valeur relative (X% x δₙ) ou d'une valeur absolue (Y degrés) ;
comparaison de δₙ et de δₙ₊₁,
- si l'écart est inférieur à la valeur autorisée sur la base du montant d'augmentation, il s'est produit un cas de pincement et l'unité d'entraînement continue de fonctionner, c'est-à-dire une régulation complémentaire de l'intensité de courant est autorisé ; et
- si l'écart est supérieur à la valeur autorisée sur la base du montant d'augmentation, la poursuite du fonctionnement de l'unité d'entraînement est autorisée uniquement sans la régulation de l'intensité de courant ;
lors de la constatation d'un dépassement du couple de décrochage du moteur, menant à l'arrêt du moteur et qui est atteint pour un angle de charge δ_{K} = 180°/N_{wick}, où N_{wick} correspond au nombre de bobines du moteur,
- un cas de pincement est supposé et le moteur est déconnecté ou son sens de rotation est inversé ; ou
- le moteur continue de tourner pendant un certain temps ou pour un certain nombre de cycles de démarrage, le moteur étant remis en service conformément à une commande de démarrage prévue après chaque dépassement du couple de décrochage du moteur ;
lorsque le temps prédéterminé est dépassé ou lorsque le nombre de cycles de démarrage est atteint, un cas de pincement est supposé et le moteur est déconnecté ou son sens de rotation est inversé ; et
si, après un dépassement du couple de décrochage, dans le temps prédéterminé ou dans le nombre de cycles de démarrage lors d'un courant ajusté pour l'angle de charge δₙ, un angle de charge δₙ₊ₘ est mesuré ;
- lequel est inférieur à la valeur autorisée sur la base du montant d'augmentation, si bien qu'un défaut temporaire qui ne repose pas sur un cas de pincement est supposé de sorte que le moteur peut continuer à tourner ; ou
- lequel est supérieur à la valeur autorisée sur la base du montant d'augmentation, si bien qu'une interruption du défaut est supposée et après le dépassement du temps prédéterminé, le moteur est déconnecté ou son sens de rotation est inversé.

7. Procédé selon l'une des revendications précédentes, **caractérisé en ce que**, dans le but d'approcher une position de butée qui limite la distance d'ajustement, les procédures suivantes sont réalisées :
exécution d'une course de normalisation avec un couple de rotation maximal défini et mesure ainsi que mémorisation de la position pour laquelle le moteur s'immobilise, dans la mesure où aucune donnée correspondante ne se trouve dans la mémoire du dispositif de commande électronique ;
fonctionnement de l'unité d'entraînement lors de la prochaine approche de la position de butée à partir d'une position d'ajustement définie à proximité de la position de butée avec un couple de rotation réduit et une vitesse fortement diminuée, la régulation du couple de rotation ayant lieu via le réglage de l'intensité de courant ; et
déconnexion de l'unité d'entraînement :
- lors de l'obtention de la position de butée mémorisée ; ou
- lors de l'obtention d'un couple de rotation maximal prescrit qui est inférieur au couple de rotation maximal de la course de normalisation lorsque la position d'ajustement correspondante ne dépasse pas une distance autorisée de la position de butée mémorisée ; ou
- lors de l'obtention d'une position d'ajustement se trouvant devant la position de butée mémorisée et, le cas échéant, en utilisant le comportement asservi du système d'ajustement.

8. Procédé selon l'une des revendications précédentes, **caractérisé en ce que**, dans le but d'approcher une position de butée qui limite la distance d'ajustement, les procédures suivantes sont réalisées :
exécution d'une course de normalisation avec un couple de rotation maximal défini et mesure ainsi que mémorisation de l'angle de charge δₙ₊₁ qui dépend de la position d'ajustement de la pièce d'ajustement, au moins pour une zone venant limiter directement la position de butée, pour déterminer le degré de grippage dépendant de la position ;
mesure de l'angle de charge actuel δₙ qui dépend de la position, lors de la prochaine approche de la position de butée, et mémorisation des valeurs mesurées ;
calcul du couple de rotation maximal devant être ajusté en fonction de l'angle de charge actuel δₙ et de l'angle de charge δₙ₊₁ du mouvement d'ajustement précédent ; et
fonctionnement de l'unité d'entraînement à partir d'une position d'ajustement définie à proximité de la position de butée avec un couple de rotation qui est inférieur au couple de rotation calculé et devant être ajusté au maximum, la régulation du couple de rotation ayant lieu via le réglage de l'intensité de courant.

9. Procédé selon l'une des revendications précédentes, **caractérisé en ce que** la fréquence du champ magnétique rotatif est réduite dans le but d'approcher la position de butée inférieure d'un lève-vitre.

10. Procédé selon la des revendication 9, **caractérisé en ce que** l'unité d'entraînement est déconnectée lorsque le couple de décrochage réduit est dépassé.

11. Procédé selon la des revendication 9, **caractérisé en ce que** l'unité d'entraînement est déconnectée juste avant d'atteindre la position de butée.

12. Procédé selon l'une des revendications précédentes, **caractérisé en ce que** le moteur est passé de l'état immobilisé à l'état de fonctionnement via une commande de démarrage qui tient compte de la somme de toutes les masses inertes du système d'ajustement dans le but de minimiser le temps de démarrage.

13. Procédé selon l'une des revendications précédentes, **caractérisé en ce que** la commande de démarrage du moteur a lieu depuis l'état immobilisé de sorte que, en fonction de la position de la pièce d'ajustement (par exemple, glace de fenêtre, porte, siège), le couple de rotation pouvant être fourni au maximum via le réglage de l'angle de charge sur différentes valeurs est limité, dans le but de restreindre la force excédentaire dans la phase de démarrage du moteur.

14. Procédé selon l'une des revendications précédentes, **caractérisé en ce que** la commande de démarrage est activée automatiquement après un arrêt du moteur en raison d'influences extérieures, par exemple en raison de forces d'accélération verticales lors du roulement sur ce que l'on appelle un parcours déformé, pour un temps déterminé ou pour un nombre prescrit de cycles de démarrage.

15. Procédé selon l'une des revendications précédentes, **caractérisé en ce que** le point de fonctionnement dynamique du moteur de chaque dispositif d'ajustement individuel est ajusté automatiquement lors d'une course de normalisation au moyen du dispositif de commande électronique.

16. Procédé selon la des revendications 15, **caractérisé en ce que** le point de fonctionnement dynamique du moteur est adapté automatiquement aux conditions changées lorsqu'un écart autorisé prescrit est dépassé.

17. Procédé selon la des revendications 16, **caractérisé en ce que** l'écart autorisé résulte de la différence entre le plus petit angle de charge δₘᵢₙ à l'intérieur de la zone de surveillance d'un mouvement d'ajustement et de l'angle de charge δ_{K} du couple de décrochage pour lequel s'ajuste une différence de couple de rotation ΔM et qui peut générer la force d'ajustement maximale autorisée sur la pièce d'ajustement.
